# EUROPÄISCHE PATENTANMELDUNG

(11) **EP 0 627 572 A1**
(43) Veröffentlichungstag der Anmeldung: **07.12.1994**
(21) Anmeldenummer: 94106669.8
(22) Anmeldetag: 28.04.1994
(51) Int. Cl.: F16F 7/10

(54) **Anordnung zur frequenzselektiven Minimisierung der dynamischen Federsteifigkeit eines Elastomerlagers**

(30) Priorität: 17.05.1993 DE 4316487
(71) Anmelder: METZELER GIMETALL AG, D-80992 München (DE)
(72) Erfinder: Gugsch, Mathias, D-80805 München (DE)
(74) Vertreter: Seibert, Hannelore

(57) **Zusammenfassung**

Zur frequenzselektiven Minimierung der dynamischen Federsteifigkeit eines Elastomerlagers, insbesondere eines Motorlagers in Kraftfahrzeugen, ist erfindungsgemäß vorgesehen, daß einer die Hauptmasse (1) abstützenden Hauptfeder (4) eine Tilgermasse (2) parallelgeschaltet ist, die über eine erste Tilgerfeder (6) mit der Hauptmasse (1) und über eine zweite Tilgerfeder (7) mit dem abstützenden Fundament (5) verbunden ist.

## Beschreibung

Die Erfindung bezieht sich auf eine Anordnung zur frequenzselektiven Minimierung der dynamischen Federsteifigkeit eines Elastomerlagers, insbesondere Motorlagers in Kraftfahrzeugen, mit einem Tilger für einen vorgegebenen Frequenzbereich.

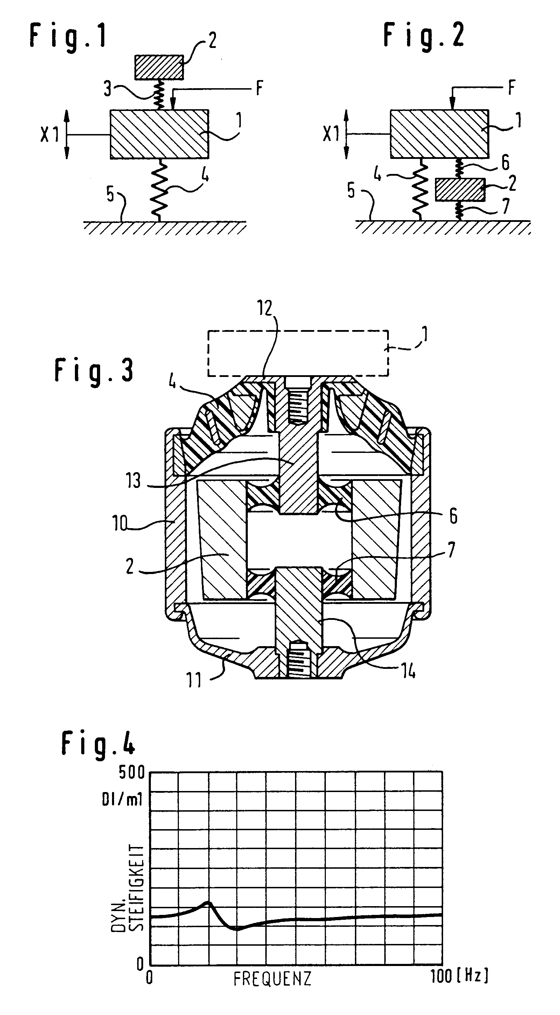

Bei bekannten Tilgeranordnungen, wie sie als Stand der Technik in Fig. 1 dargestellt sind, wird üblicherweise eine Tilgermasse 2 über eine Feder 3 freischwingend auf der Hauptmasse 1 eines schwingungsfähigen Systems gelagert. Durch eine solche Anordnung wird bei Resonanz des Tilgers, die bestimmt ist durch die Tilgermasse 2 und die Tilgerfeder 3, die erzwungene Schwingung der Hauptmasse 1, die durch Bodenkrafterregung, Federkrafterregung oder Unwuchterregung verursacht sein kann, beruhigt. Diese Beruhigung der Hauptmasse in Form einer Reduzierung der Schwingwege führt zu einer Reduzierung der von der die Hauptmasse 1 abstützenden Hauptfeder 4 in das Fundament 5, d.h. die isolierte Seite des schwingungsfähigen Systems, eingeleiteten Kräfte.

Bei einem solchen System ergeben sich jedoch folgende Probleme. Eine allein über eine Feder 4 abgestützte Masse weist für eine bestimmte Frequenzlage eine stark überhöhte Resonanz auf. Wenn jetzt die Schwingungen der Hauptmasse 1 mit einem Tilger 2 für die vorgegebene Resonanzfrequenz bedämpft werden soll, so ergeben sich für das Gesamtsystem zwei Eigenfrequenzen, wobei die erste Eigenfrequenz bei einer niedrigeren Frequenz und die zweite Eigenfrequenz bei einer höheren Frequenz als die ursprüngliche Eigenfrequenz ohne Tilger liegen. Damit ergeben sich zwei Resonanzfrequenzen, wodurch auch verstärkt Kräfte in das Fundament eingeleitet werden.

Wenn man beispielsweise bei einem Kraftfahrzeugmotor zur akustischen Dämmung bei Leerlaufdrehzahlen einen solchen Tilger einsetzen würde, so würde jedes Mal bei Verlassen der Leerlaufdrehzahl zu höheren Drehzahlen die zweite Resonanz durchfahren werden, was zu einem erheblich ansteigenden Innengeräusch beim Anfahren des Fahrzeuges führen würde.

Der vorliegenden Erfindung liegt daher die Aufgabe zugrunde, durch eine frequenzselektive Minimierung der dynamischen Federsteifigkeit eines solchen Elastomerlagers die Schwingungsisolation von Brennkraftmaschinen bei Leerlaufdrehzahlen zu verbessern.

Zur Lösung dieser Aufgabe ist erfindungsgemäß vorgesehen, daß einer die Hauptmasse abstützenden Hauptfeder eine Tilgermasse parallelgeschaltet ist, die über eine erste Tilgerfeder mit der Hauptmasse und über eine zweite Tilgerfeder mit dem abstützenden Fundament verbunden ist.

Somit wird die Tilgermasse von der Bewegung der Hauptmasse über die erste Tilgerfeder angeregt und leitet dann über die zweite Tilgerfeder die Kräfte in das Fundament ein. Somit wirkt auf das Fundament also die Summe der Kräfte aus Hauptfeder und zweiter Tilgerfeder. Da der Tilger beim Durchlaufen der Resonanz seine Phase umdreht, d.h. die Phase zwischen Hauptmassenschwingung und Tilgerschwingung, gibt es im Anschluß an eine Überhöhung der Summenkraft eine Erniedrigung derselben, die darauf beruht, daß sich die von der Hauptfeder und der zweiten Tilgerfeder eingeleiteten Kräfte kompensieren.

Die Tatsache, daß in der Praxis nur bedämpfte Federn infolge der ihr innewohnenden Materialdämpfung eingesetzt werden können, kann für den Effekt der Kraftkompensation noch zusätzlich ausgenutzt werden. Zweckmäßigerweise wird daher als Hauptfeder ein stark bedämpfter Gummikörper mit einem Phasenwinkel von mindestens 8° und als Tilgerfedern schwach bedämpfte Gummikörper mit einem Phasenwinkel von 4 bis 6° verwendet.

Zweckmäßig ist es ferner, wenn die beiden Tilgerfedern eine ungleiche Steifigkeit aufweisen. Dabei ist es von Vorteil, wenn die zweite Tilgerfeder eine höhere Steifigkeit als die erste Tilgerfeder aufweist, wobei das Steifigkeitsverhältnis zweckmäßigerweise 2:1 beträgt und die Summe der Steifigkeiten beider Tilgerfedern im Bereich zwischen 25 und 75 N/mm liegen sollte.

Bei einem Motorlager mit einer vorstehend beschriebenen Anordnung ist erfindungsgemäß ein topfförmiges, mit der Fahrzeugkarosserie verbundenes Gehäuse vorgesehen, von dessem oberen Bereich über eine hohlkegelförmige Tragfeder als Hauptfeder der Fahrzeugmotor abgestützt ist, wobei die Tragplatte der Tragfeder eine zentrale, nach unten in das Gehäuse ragende, bolzenförmige Verlängerung aufweist, an der über eine erste Tilgerfeder die hohlzylindrisch ausgebildete Tilgermasse angelenkt ist, und daß das untere Ende der Tilgermasse über eine zweite Tilgerfeder mit einem vom Gehäuseboden aufragenden Bolzen verbunden ist.

Dabei ist es zweckmäßig, wenn die Tilgerfedern ringförmig ausgebildet und mit ihrem Außenumfang am Innenumfang der Tilgermasse und mit ihrem Innenumfang am Lagerbolzen bzw. am Karosseriebolzen anvulkanisiert sind.

Anhand einer schematischen Zeichnung sind Aufbau und Funktionsweise eines Ausführungsbeispiels nach der Erfindung näher erläutert. Dabei zeigen:
- Fig. 1: eine Tilgeranordnung nach dem Stand der Technik,
- Fig. 2: das Grundprinzip der erfindungsgemäßen Tilgeranordnung,
- Fig. 3: einen Längsschnitt durch ein entsprechend gestaltetes Motorlager mit Tilgermasse nach dem Grundprinzip der Fig. 2 und
- Fig. 4: ein Diagramm über den dynamischen Steifigkeitsverlauf eines solchen Motorlagers nach Fig. 3.

Eine Tilgeranordnung entsprechend Fig. 1, wie sie der Stand der Technik repräsentiert, ist bereits einleitend ausführlich dargestellt worden.

Das Grundprinzip der erfindungsgemäßen Lösung ist in Fig. 2 dargestellt. Dabei ist die Hauptmasse 1 über die Hauptfeder 4 auf dem Fundament 5 abgestützt. Parallel zur Hauptfeder 4 ist jetzt die Tilgermasse 2 angeordnet, die über eine erste Tilgerfeder 6 an die Hauptmasse 1 angekoppelt ist und über eine zweite Tilgerfeder 7 die auftretenden Kräfte in das Fundament 5 einleitet. Bei gleicher Schwingungsrichtung von Hauptmasse 1 und Tilgermasse 2 werden dabei zunächst größere Kräfte in das Fundament 5 eingeleitet, während bei Durchlaufen durch die Resonanz des Tilgers sich die von Hauptfeder 4 und zweiter Tilgerfeder 7 in das Fundament 5 eingeleiteten Kräfte kompensieren, so daß sich damit eine Erniedrigung der Summenkraft und damit eine Absenkung der dynamischen Steifigkeit ergibt.

In Fig. 3 ist anhand des Ausführungsbeispiels eines Motorlagers die Anwendung des in Fig. 2 dargestellten Grundprinzips verwirklicht. Dabei ist zunächst ein topfförmiges Gehäuse 10 vorgesehen, das über seine Bodenplatte 11 mit der Fahrzeugkarosserie starr verbunden ist. Im Oberteil des Gehäuses 10 ist als Hauptfeder 4 eine hohlkegelförmige Tragfeder eingesetzt, die über die zentrale Lagerplatte 12 den schematisch als Hauptmasse 1 dargestellten Motor abstützt.

Diese Lagerplatte 12 weist eine nach unten in das Gehäuse 10 ragende bolzenförmige Verlängerung 13 auf, an derem unteren Ende über eine ringförmig ausgebildete erste Tilgerfeder 6 die hohlzylindrisch ausgebildete Tilgermasse 2 angelenkt ist. Am unteren Ende der Tilgermasse 2 ist diese über die zweite Tilgerfeder 7 mit einem vom Gehäuseboden 11 aufragenden Bolzen 14 verbunden.

Unter Realisierung des in Fig. 2 dargestellten Grundprinzips wird somit die Tilgermasse 2 von der Bewegung der Hauptmasse 1 über die erste Tilgerfeder 6 angeregt und leitet über die zweite Tilgerfeder 7 Kräfte über die Bodenplatte 11 in das nicht näher dargestellte Fundament ein. Dabei wird beim Durchlaufen der Resonanz der Tilgermasse 2 die in die Karosserie eingeleitete Summenkraft reduziert, da sich die von der Hauptfeder 4 und der zweiten Tilgerfeder 7 eingeleiteten Kräfte kompensieren. Dabei ist es besonders zweckmäßig, wenn eine schwach bedämpfte Tilgerfeder mit einem Phasenwinkel von 4 bis 6° mit einer höher bedämpften Hauptfeder 4 mit einem Phasenwinkel von 8 bis 12° oder höher kombiniert wird, um damit die derartigen Gummifedern innewohnende Materialdämpfung für den Effekt der Kraftkompensation auszunutzen.

Darüberhinaus ist es zweckmäßig, wenn die erste Tilgerfeder 6 und die zweite Tilgerfeder 7 nicht die gleiche Steifigkeit aufweisen. Die Summe der Steifigkeiten der ersten und zweiten Tilgerfeder bestimmt zusammen mit der Tilgermasse die Eigenfrequenz des Tilgers und läßt sich daher nicht frei wählen. Dabei ist jedoch noch zu berücksichtigen, daß, je geringer die Steifigkeit der zweiten Tilgerfeder 7 ist, die die Kräfte in die Karosserie einleitet, umso geringer auch die zur Kompensation zur Verfügung stehenden Kräfte sind. Daher ist es zweckmäßig, wenn die zweite Tilgerfeder 7 steifer ausgeführt ist als die erste Tilgerfeder 6. Es hat sich dabei als zweckmäßig erwiesen, wenn dieses Steifigkeitsverhältnis etwa 2:1 beträgt und wenn die Steifigkeiten der beiden Tilgerfedern im Bereich von 25 bis 75 N/mm liegen, damit der Tilger insgesamt mit einer Tilgermasse von etwa 1 bis 3 kg bei etwa 25 Hz seine Eigenresonanz hat.

Damit ergibt sich bei der beschriebenen Lagerung mit einem parallelgeschalteten Tilger und entsprechender Abstimmung im Leerlauf eine Reduzierung der in das Fahrzeug eingeleiteten Kräfte und damit auch eine Reduzierung der dynamischen Steifigkeit. Dieser Effekt wird jedoch durch eine erhöhte Krafteinleitung bei Frequenzen unterhalb der Leerlauffrequenz erkauft.

Der Gesamtverlauf der dynamischen Steifigkeit ist in dem Diagramm nach Fig. 4 über der Frequenz aufgetragen. Für eine optimale Wirkungsweise muß der Tilger auf die Frequenz abgestimmt werden, bei der eine Steifigkeitsminimierung eintreten soll, also die Leerlauffrequenz, die bei einem 4-Zylinder-Motor etwa 25 Hz beträgt. Wie man aus dem Diagramm ersieht, weist die beschriebene Anordnung etwa eine Resonanzfrequenz für den Tilger von unter 30 Hz auf, die in etwa der Leerlauffrequenz entspricht, während unterhalb der Leerlaufdrehzahl im Bereich von 20 Hz eine erhöhte Krafteinleitung zu verzeichnen ist.

Da dieser Bereich einer erhöhten dynamischen Steifigkeit jedoch nur bei Anlassen des Motors vor Erreichen der Leerlaufdrehzahl durchfahren werden muß und dabei aber nur sehr kurzzeitig auftritt, kann dieser Nachteil leicht in Kauf genommen werden, um insgesamt bei den Leerlaufdrehzahlen eine Verbesserung der Schwingungsisolation derartiger Motoren zu erreichen.

## Patentansprüche

1. Anordnung zur frequenzselektiven Minimierung der dynamischen Federsteifigkeit eines Elastomerlagers, insbesondere Motorlagers in Kraftfahrzeugen, mit einem Tilger für einen vorgegebenen Frequenzbereich, dadurch gekennzeichnet, daß einer die Hauptmasse (1) abstützenden Hauptfeder (4) eine Tilgermasse (2) parallelgeschaltet ist, die über eine erste Tilgerfeder (6) mit der Hauptmasse (1) und über eine zweite Tilgerfeder (7) mit dem abstützenden Fundament (5) verbunden ist.

2. Anordnung nach Anspruch 1, dadurch gekennzeichnet, daß als Hauptfeder (4) ein stark bedämpfter Gummikörper mit einem Phasenwinkel von mindestens 8° und als Tilgerfedern (6, 7) schwach bedämpfte Gummikörper mit einem Phasenwinkel von 4 bis 6° verwendet sind.

3. Anordnung nach Anspruch 1, dadurch gekennzeichnet, daß die beiden Tilgerfedern (6, 7) eine ungleiche Steifigkeit aufweisen.

4. Anordnung nach Anspruch 3, dadurch gekennzeichnet, daß die zweite Tilgerfeder (7) eine höhere Steifigkeit als die erste Tilgerfeder (6) aufweist.

5. Anordnung nach Anspruch 4, dadurch gekennzeichnet, daß das Steifigkeitsverhältnis 2:1 beträgt.

6. Anordnung nach Anspruch 4 oder 5, dadurch gekennzeichnet, daß die Summe der Steifigkeiten beider Tilgerfedern (6, 7) im Bereich zwischen 25 und 75 N/mm liegen.

7. Motorlager mit einer Anordnung nach einem oder mehreren der Ansprüche 1 bis 6, dadurch gekennzeichnet, daß ein topfförmiges, mit der Fahrzeugkarosserie verbundenes Gehäuse (10) vorgesehen ist, von dessem oberen Bereich über eine hohlkegelförmige Tragfeder (4) als Hauptfeder der Fahrzeugmotor (1) abgestützt ist, wobei die zentrale Lagerplatte (12) eine zentrale, nach unten in das Gehäuse (10) ragende, bolzenförmige Verlängerung (13) aufweist, an der über die erste Tilgerfeder (6) die hohlzylindrisch ausgebildete Tilgermasse (2) angelenkt ist, und daß das untere Ende der Tilgermasse (2) über die zweite Tilgerfeder (7) mit einem vom Gehäuseboden (11) aufragenden Bolzen (14) verbunden ist.

8. Motorlager nach Anspruch 7, dadurch gekennzeichnet, daß die Tilgerfedern (6, 7) ringförmig ausgebildet und mit ihrem Außenumfang am Innenumfang der Tilgermasse (2) und mit ihrem Innenumfang am Lagerbolzen (13) bzw. am Karosseriebolzen (14) anvulkanisiert sind.
